# EUROPEAN PATENT SPECIFICATION

(11) **EP 1 406 466 B1**
(45) Date of publication and mention of the grant of the patent: **29.01.2014**
(21) Application number: 03396091.5
(22) Date of filing: 30.09.2003
(51) Int. Cl.: H04W 4/02

(54) **Tracking of terminal device in mobile communications network**
Verfolgung von einem Endgerät in einem Mobilkommunikationsnetzwerk
Détermination de la position d'un dispositif terminal dans un réseau de communication mobile

(30) Priority: 04.10.2002 FI 20021771
(43) Date of publication of application: 07.04.2004
(73) Proprietor: Elisa Oyj, 00520 Helsinki (FI)
(72) Inventor: Lindell, Johannes, 33340 Tampere (FI)
(74) Representative: Tiilikainen, Jarkko Tapio

(56) References cited:
- WO-A-01/47303
- WO-A-03/047295
- US-A- 5 751 246
- US-A- 5 933 114
- US-A1- 2001 025 251

## Description

The present invention relates to a method, according to the preamble of Claim 1, for a terminal tracking service. The invention also relates to corresponding systems for a terminal tracking service.

Tracking services of this kind are used for tracking the movements of terminals in a mobile network. In the tracking service, the location of the terminal is positioned, with the aid of a positioning method, several times during the tracking period.

Generally, the term positioning is used to refer to the determining of a position relative to a known system of co-ordinates, but positioning can also be limited to the determining of location locally, relative to a selected route or known objects.

Numerous different positioning methods are disclosed in the prior art. For example, a satellite positioning system, the best known of which is the GPS (Global Positioning System) satellite system, can be used for positioning mobile stations. In the prior art, a relative satellite positioning is also disclosed, in which the accuracy of the satellite positioning is improved with the aid of fixed ground stations, which continuously detect the path of the satellites and calculate local, momentary corrections. The positioning correction data can be transmitted in real time from the ground stations to the terminal of the user. Further, assisted satellite positioning is known.

Besides relative positioning, the positioning of a satellite receiver can also be assisted in other ways. The signal sent by satellites is quite weak, nor can it be often detected at all in places with no direct line of vision to the satellite. This is the case in, for example, crowded city spaces, or indoors, or if the signal has to travel through dense vegetation. The receivability of the signal can be predicted quite well, especially if the position of the receiver is known at least approximately. In assisted satellite positioning (A-GPS, Assisted GPS), suitable current base data are supplied to the positioning device and the signal is filtered from the background noise. Such a method requires the terminal to have a greater calculation capacity than normal, which is reflected in the size and power consumption of the device.

One way to position a terminal is to position it with the aid of a mobile network. In this document, such a positioning method is referred to as network positioning. In a mobile network, a terminal is always within the sphere of some cell and base station, which provides a rough datum for the position of the mobile station. The more highly developed network positioning methods are based on using the base station to measure the time of travel and the angle of the signals of the mobile network, or measuring the time of travel in the mobile station. Standardization of the methods has progressed and the experiments have been expedited by being mandated by public officials in the USA.

The simplest network positioning method is cell positioning. In this case, positioning data is produced on the position of the base station (COO, Cell Of Origin) of the mobile network. Especially outside of urban areas, a method based solely on cell positioning is highly imprecise, as the cells of the network are large and the base station providing the service may not necessarily be the nearest one. Thus, the largest inaccuracies can be up to tens of kilometres, and the smallest, in towns, a few hundred metres.

Another way to implement network positioning is positioning based on signal strength. If it is assumed that the signal level of the base station is inversely proportional to the distance, the position of the mobile station can be calculated, if the signal levels of at least three base stations are detection simultaneously. In practice, the strength of the signal behaves in a much more complicated manner. If a model can be made of the signal strengths, or if they can be determined beforehand with practical measurements, the position can be determined more reliably than in the previous method on the basis of signal observations. In practice, all changes in the environment, including the user of the mobile station themselves, cause changes in the strength of the detected signal. The accuracy obtainable by using the method appears to be somewhat better in urban conditions and considerably better in large cells in the rural areas, than cell positioning.

A third way to implement network positioning is positioning on the basis of the angle of arrival of the signal. In the arrival angle method (AOA, Angle of Arrival), the base station detects the angle of the signal arriving from a mobile station with the aid of a pair, or a group of antennas. The method requires a specific type of antenna and the signal to arrive directly from the terminal and not to be reflected, which, particularly in urban conditions, is very unusual. In practice, the method can be used mainly in rural areas, where in any case only two base stations may be available.

A fourth way to implement network positioning is positioning on the basis of the time of arrival of the signal. In the time of arrival method (TOA, Time Of Arrival, TDOA, Time Difference Of Arrival), the base stations measure the time of travel of a signal coming from a mobile station. On the basis of the delay, it is possible to calculate the position of the device, provided at least three base stations are able to detect the signal. The accuracy of the method is improved by mutually time-synchronizing the base stations. The time of travel and, at the same time, the accuracy of the method are affected by possible signal reflections.

The differences of the time of travel of the signals coming from different base stations can also be detected in the mobile station (OTD, Observed Time Difference, E-OTD, Enhanced Observed Time Difference). The observations can be transmitted for definition of the position to the network's positioning server. In practice, the method requires software updates to existing telephones.

All of the positioning methods mentioned above have their own limitations. In practice, the best possible result is obtained by combining different methods. By combining cell positioning, signal strength, and arrival time and angle observations, and satellite-positioning technology, it is possible to achieve considerably more reliable and functional positioning practice, than by using any single method.

In addition to the aforementioned methods, an indoors positioning method is also known, in which it is possible to utilize, for example, WLAN or Bluetooth technologies. Also indoor positioning can be used to assist combined positioning methods.

Positioning methods can be used based on a terminal initiative or on a network initiative. Positioning methods initiated by a network and a terminal are also known in the ETSI and 3GPP positioning standards, as well as in the Location Interoperability Forum consortium.

The term terminal-initiated positioning refers to positioning, which is performed on the basis of a direct initiative coming from the direction of the terminal. This is typically used in connection with 'Where is the nearest...?'-type services. In services of this kind, the terminal or the user of the terminal wishes some information or service, relative to their position at that moment. The terminal can then be positioned on the basis of the initiative coming from its direction and the desired information or service can be supplied to the terminal. Positioning is thus implemented service-request-specifically, thus limiting the loading placed on the network.

In network-initiated or network-performed positioning on the other hand, the question is of some application linked to a mobile network, or in connection with it wishing to know the current position of some specific mobile-network terminal. Network-initiated positioning may also be one-time, but applications also exist, in which it is wished to track the route of travel of mobile stations continuously, or in which it is wished to monitor the presence of specific mobile stations in some geographical area. The number of such applications can be expected to increase, as more and more functions are transferred to be implemented through a mobile network.

One example of such an application is road charges or road tolls charged to vehicles. For example, in the Helsinki area a need may arise to tax vehicles for the use of road in a limited area, for example, inside the area defined by Ring Road 3.

Another example of an application is the management of flows of materials, or the surveillance of persons. In these applications, it is desired to known whether some transport delivery or person has arrived within a specific area. It may also be wished to track the movements of a load or a person within some more precisely defined area.

The increase of services like those referred to above will cause capacity problems in mobile networks. This is due to the fact that each terminal that is connected to the services must be positioned continuously, in order to know when the terminal arrives in the geographical area that is the actual target area of the service. There are many needs for such services, so that mobile networks and positioning services will require extensive

WO 03/047295, which is prior art under Article 54(3) EPC, discloses a system and method for location a mobile terminal. The system uses Cell Broadcast messages to trigger sending of a presence message by a GSM mobile station.

US-A-5 933 114 discloses a process and apparatus for locating mobile stations for the purpose of charging road tolls. The publication discloses utilizing modified GSM mobile stations in the method, together with a highway toll charging system.

US 2001/0025251 discloses a method according to the preamble of claim 1 for automatic road toll collection application. The disclosed system utilizes GPS systems and dedicated road-side transmitters that alert the in-vehicle System.

The invention is intended to develop a positioning method, with the aid of which it will be possible to reduce the load caused by a positioning service, when tracking movements of GSM and UMTS terminals.

The invention is based on defining at least one observation area within the service area of the mobile network, within which area the movement of the mobile station or other terminal is monitored. The movement of the mobile station outside the observation area is not monitored, or else the tracking is carried out much less thoroughly. In other words, the network-initiated positioning is carried out mainly in the observation area. Outside the observation area, on the other hand, network-initiated positioning is not carried out for services targeted on the observation area. Between the observation area and the rest of the service area are located observation means, with the aid of which it is possible to detect the presence of the terminal in the boundary area between the observation area and the rest of the service area of the mobile network. When a mobile station connected to the positioning service is detected in the boundary area, a message is sent to the positioning service, on the basis of which the positioning service initiates or terminates the network-initiated positioning of the relevant mobile station for the service in question. The actual positioning can be performed with the aid of any suitable positioning method whatever.

More specifically, the method according to the invention is characterized by what is stated in the characterizing portion of Claim 1. The system according to the invention is, in turn, characterized by what is stated in Claims 7.

Considerable advantages are gained with the aid of the invention. With the aid or the invention it is possible to produce precise and effective positioning and tracking services, without placing an unnecessary load on the mobile network and the positioning system.

The savings in resources achievable with the aid of the invention can be illustrated, for example, with the aid of the aforementioned road-toll application. When using the prior art, the terminal should be positioned continuously, in order to detect the terminal arriving within a specific geographical area, in this example, inside the area defined by Ring Road 3. If one can imagine that it is desired to determine when a certain terminal, which is normally located in northern Finland, arrives inside Ring Road 3, then this terminal must be positioned continuous in certain cycles. It may take years before the terminal in question arrives in the defined area, so that most of the positioning cycles are useless and only place an unnecessary load on the system. The prior art and the known standards do not support initiating positioning by arrival in a specific geographical area, nor terminating positioning by departure from the area.

In the following, the invention is examined with the aid of examples and with reference to the accompanying drawings.

Figure 1 shows one embodiment of the invention, in which the Cell Broadcast functionality of the mobile network is used.

Figure 2 shows one embodiment of the invention, in which a vehicle identification system is used.

Figure 3 shows one method, which can be used in the embodiments of the invention, in order to detect a mobile station that is already in the observation area.

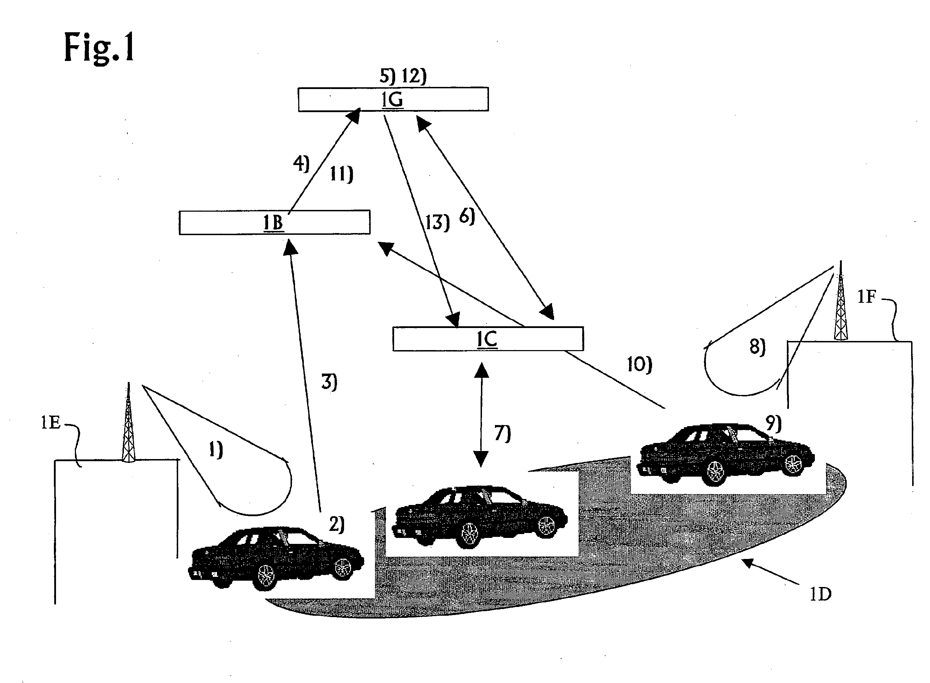

In the example of Figure 1, the system includes not only a mobile network and the basic components of a mobile telephone network, but also a broadcast centre (Cell Broadcast Center), a short-message centre 1B, and a positioning system 1C. In addition, control means arranged in connection to the mobile network terminals, for example mobile-station SIM (Subscriber Identification Module) cards, are connected to the system. In the embodiment of the figure, the control means are equipped with SIM Tool Kit support. In addition, an application 1G, which controls the operation of the service, is connected to the system.

The broadcast centre is used to produce a Cell Broadcast function. Cell Broadcast is a method, standardized by the ETSI, by means of which it is possible to distribute a push-type notification to a limited geographical area. CB functionality is defined in the standard Technical Realization of Cell Broadcast Service (CBS) GSM 03.41.

In the embodiment of Figure 1, Cell Broadcast technology is used to inform the terminal that it arrives at a limited geographical area, or correspondingly that it is departing from it. An application sends a Cell Broadcast message at the boundary of a geographical area, informing about the arrival at the area or the departure. In the embodiment of the figure, part of the service area of the mobile network is defined as the observation area 1D. The observation area 1D is typically several mobile-network cells in size. The observation area 1D can include, for example, 50 - 1000 mobile-network cells. If necessary, there can be considerably more cells, but in the embodiment show in Figure 1 the observation area 1D should, however, be clearly smaller in extent that the entire service area, in order to achieve the desired saving in positioning resources. In the embodiment of Figure 1, the broadcast centre transmits the area notification message through the base stations 1E and 1F at the edges of the observation area 1D. The mobile-network cells, in the area of which the area notification message is transmitted, form, in this embodiment, a transition zone between the observation area 1D and the rest of the mobile network's service area. In Figure 1, two transition zones are shown: one in the surroundings of the base station 1E and the other in the surroundings of the base station 1F. In a practical embodiment, the number of the transition zones can be chosen as required. There must be at least one transition zone and in some embodiments several tens of transition zones may be required. If necessary, each transition zone can cover several mobile cells.

The defining principle of the transition zones can be examined illustratively with the aid of the road-toll application that has already been referred to above. In a road-toll application, it is appropriate to locate the transition zones on the entry and exit roads to the monitored area, so that the vehicles entering and leaving the area must travel through preferably exactly one transition area. If there were possible routes into the area, which did not include a single transition zone, a vehicle would remain undetected and the positioning of the vehicle would not be initiated in the intended manner. If, on the other hand, there were several transition zones on an entry or exit road, the system would be loaded needlessly while in addition the system might make errors of interpretation regarding entries to and exits from the area. In addition, it can be understood on the basis of the road-toll example, that the transition zones must be dimensioned to be sufficiently large to ensure that vehicles entering and leaving the area will be detected in the transition zones.

In the example of Figure 1, each mobile-network terminal, which can be, for example, a GSM or UMTS telephone, or some other communications device equipped with the necessary functionality, has connected to it a SIM card or other similar control device, with the aid of which the terminal can be forced to implement the desired operation. In the example of Figure 1, a SIM card is used, in which there is SIM toolkit readiness. SIM toolkit is a method, standardized by the ETSI, for communication between the terminal and the SIM (Subscriber Identification Module). The SIM toolkit functionality is defined in the standard Specification of the SIM Application Toolkit for the Subscriber Identity Module - Mobile Equipment (SIM-ME) interface GSM 11.14.

In the example of Figure 1, the SIM Toolkit's task is to receive a Cell Broadcast message, to analyse the message, and to detect that it relates to initiating a positioning event in a limited geographical area. If such a situation is detected, the SIM Toolkit's task is to command the terminal to send a reply message to a predefined application number, which registers arrival in the area or departure from it, and correspondingly initiates or terminates positioning.

Figure 1 also shows a short message centre 1B. A short message is a way, standardized by the ETSI, of sending messages between terminals. The short message functionality is defined in the standard Technical Realization of the Short Message Service (SMS); Point-to-Point (PP) GSM 03.40. In the embodiment shown in Figure 1, a short message is used to notify the application that the terminal has received a Cell Broadcast message.

With the aid of the system described above, it is possible to perform a method, in which the following operations are carried out:
- The application sends a Cell Broadcast message at the border of the geographical area, in which it is wished to initiate or terminate positioning. In other words, an area notification message is sent in the transition zone.
- On arrival in the area, in which it is wished to initiate or terminate positioning, the terminal receives the CB message. With the aid of the SIM Toolkit application, the terminal recognizes that the message is intended for the terminal.
- The terminal responds to the message with the aid of the SIM Toolkit application, by sending a short message to a predefined application number.
- The application receives the short message and checks whether the terminal is already in the area in which positioning should be performed, i.e. in the observation area. If the terminal is not in the observation area, the application decides that it is just arriving there and initiates positioning. If the application recognizes that the terminal is already in the area, it decides that the terminal is leaving the area and interrupts positioning. In order to decide whether the terminal is in the observation area, the application can maintain a database of terminals in the observation area.

The following describes, with reference to Figure 1, the method that can be performed in the system described above. In the method, a reply is requested from the terminals that arrive in, or depart from a defined geographical area (the observation area 1D) and the positioning is correspondingly initiated or terminated.

In the example of the method, the following procedural stages are carried out:
1) A base station at the border of the geographical area transmits a Cell Broadcast message.
2) A vehicle arriving in the area receives the message and interprets it with the aid of its SIM Toolkit.
3) The SIM Toolkit application sends a text message.
4) The short message centre transmits the text message to the positioning application.
5) The positioning applications interprets that the terminal has arrived in the area.
6) The positioning application initiates the positioning of the terminal that has arrived in the area.
7) The positioning system positions the terminal.
8) A base station at the border of the geographical area transmits a Cell Broadcast message.
9) A vehicle arriving at the area receives the message and interprets it with the aid of its SIM Toolkit.
10) The STK application sends a text message.
11) The short message centre transmits the text message to the positioning application.
12) The positioning application interprets that the terminal is leaving the area.
13) The positioning application terminates positioning.

The embodiment of Figure 1 has been described with the aid of an example relating to tracking a vehicle. The system and method are, however, equally applicable to, for example, the surveillance of persons. With the aid of the system it is equally possible to track, for example, convicts, or other persons belonging to a certain risk group. In that case, a terminal must be attached to the persons. Correspondingly, the movements of any person, animal, or goods can also be monitored, provided it is possible to attach to them, or otherwise have them carry a mobile network terminal, which has the necessary communications functionality and the capacity to control the operation of the method.

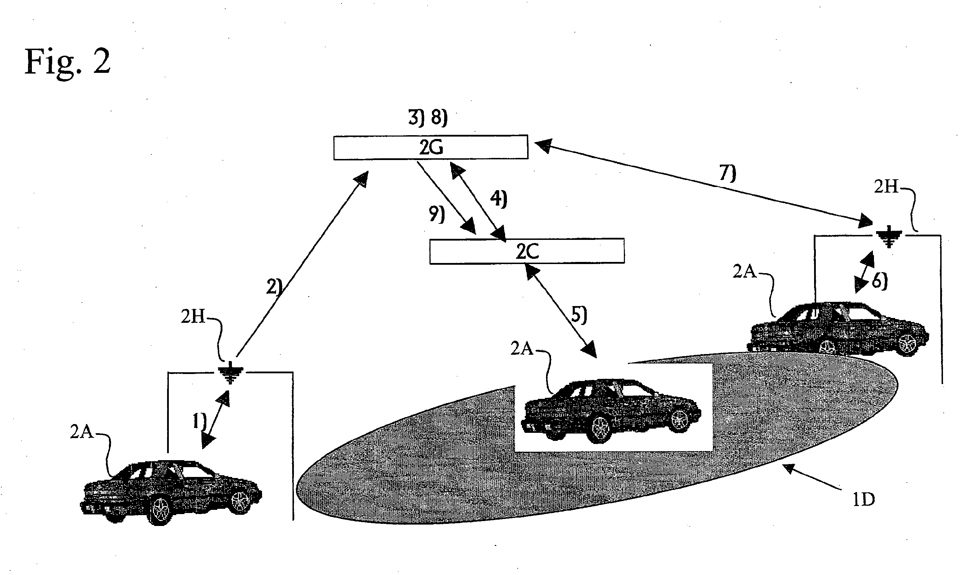

The example of Figure 2, on the other hand, is intended mainly for tracking vehicles 2A, even though it too can be contemplated to be applied to other objects too. In the example of Figure 2, the system includes a positioning system 2C and an application 2G, which controls the operation of the service. In addition, the system includes a mobile network, which is used for communication between the terminal, the positioning system 2C, and the application 2G. In the embodiment of Figure 2, a vehicle 2A identification module and a vehicle-specific communication device, with the aid of which the terminal can communicate over the mobile network, connected to the identification module are attached to the vehicle 2A. In this example, the terminal of the vehicle 2A thus includes at least an identification module and a communication device. In the embodiment of Figure 2, an identification-module reader 2H, which is located at the roadside, is also required.

The vehicle's 2A automatic identification module is a module permanently fitted to the vehicle 2A, with the aid of which the arrival of the vehicle 2A in, or its departure from a limited geographical area (the observation area 2D) is detected. The identification module gives the vehicle's identity, for example, its registration number, and the MSISDN number of the terminal permanently fitted to the vehicle for positioning. The identification module communicates with the roadside reader (the identification-module reader 2H).

The identification-module reader 2H reads the data of the identification module permanently fitted to the vehicle 2A and reports them to the application, which reports the event and initiates or terminates positioning.

The identification module and reader can communicate mutually, for example, over a laser, RF transmitter/receiver, or infrared link. The identification-module reader 2H can be installed either above road over the lane, or in the road.

The architecture of vehicle identification is described in greater detail in the standard ISO 17573, RTT - EFC - System architecture for vehicle-related transport services. This standard does not, however disclose a terminal connected to the identification module, or a positioning system. In addition to the components described in the standard or similar, the embodiment of Figure 2 also uses a vehicle-specific communications device, when tracking the movement of a vehicle within a desired geographical area. In the embodiment of Figure 2, a positioning system is also used to position the movement of a vehicle in a desired limited geographical area, i.e. in the observation area.

With the aid of the system described above, it is possible to implement a method, in which the arrival of a terminal in or its departure from a defined geographical area (the observation area) is detected and positioning is initiated or terminated on the basis of this. It is then possible to perform a method, in which the following operations are carried out:
- An identification module and a mobile-network terminal are permanently fitted to each vehicle.
- Vehicle-specific identification-module readers are permanently installed at the borders of the observation area.
- When a vehicle equipped with an identification module passes an identification-module reader, the event is reported to the application.
- The application checks whether the vehicle is arriving in the limited geographical area or departing from it. This can be done in the manner of the example of Figure 1, by searching a database maintained for this purpose, for instance.
- If the vehicle is arriving in the area, positioning is initiated and the time of arrival is entered in the database.
- If the vehicle is leaving the area, positioning is terminated and the time of departure is entered in the database.

The following describes, with reference to Figure 2, a method, which can be implemented in the system of Figure 2. In the method, a reply is requested from the terminals that arrive in or depart from a defined geographical area (the observation area 2D), and the positioning is correspondingly initiated or terminated.

In the example method, the following procedural stages are carried out:
21) The detection system at the border of the observation area detects the arrival of a vehicle at the border of the area.
22) The system reports the arrival of the vehicle at the border of the area.
23) The positioning application interprets that a terminal has arrived in the area.
24) The positioning application initiates the positioning of the terminal that has arrived in the area.
25) The positioning system positions the terminal.
26) The detection system at the border of the geographical area detects the arrival of the vehicle at the border of the area.
27) The system reports the arrival of the vehicle at the border of the area.
28) The positioning application interprets that the terminal is leaving the area.
29) The positioning application terminates the positioning.

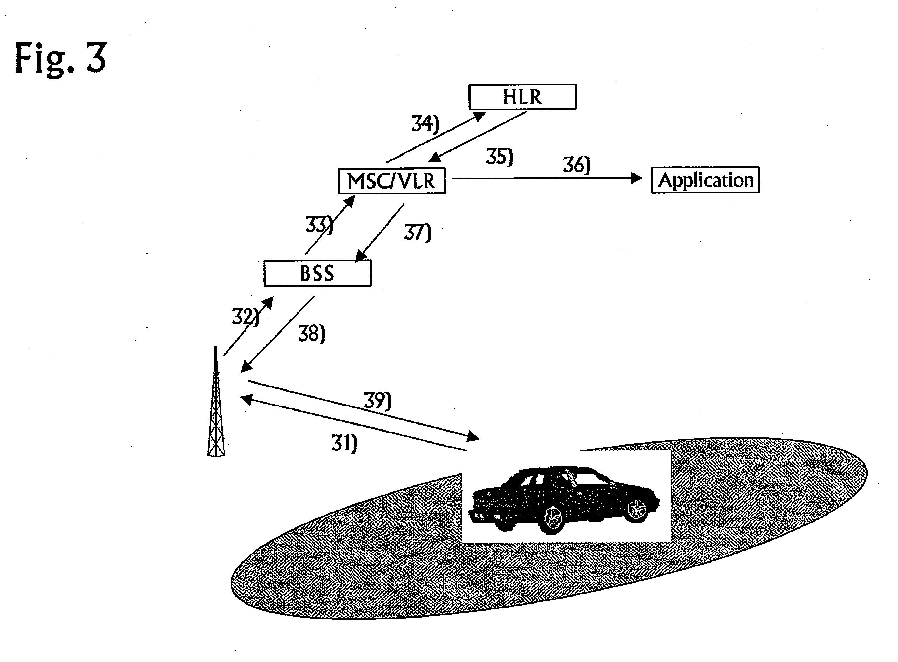

In practice, it is possible for the terminal being tracked to remain undetected in the transition zone, when moving into or out of the observation area. This can happen, if an error arises in the communication between the terminal and the observation devices, or if a connection cannot be formed. For example, if communication takes place with the aid of a mobile station, and the mobile station is switched off, the required detection signal will not be obtained. Functions can also be built into the tracking service for such cases. If the terminal leaves the observation area undetected, tracking continues and it is possible in connection with the following positioning cycle to notice that the terminal is located outside the observation area. The other way round, the situation is more difficult, as there may be no need to position a terminal that has arrived in the observation area undetected. The tracking service can be equipped with the method shown in Figure 3, in order to detect such terminals.

In the method of Figure 3 an MSC/VLR (Mobile Switching Center / Visitor Location Register) sends information on a Location Update event to an application, which analyses whether or not the terminal is in the observation area. In practice, this can be implemented in such a away that, when the terminal switched on, the terminal requests a location update from the network (MSC/VLR). The network approves the location update request and sends an acknowledgement to the terminal. In such an application, the observation area should be formed of one or more Location Areas, so that it will be possible to obtain information as to whether the terminal has moved into or out of the area with the power switched off.

The following describes the method of Figure 3 is greater detail. In the example of Figure 3, the initial situation is that the terminal has been brought when 'silent' into the observation area and the Location Area has changed.
31) The terminal requests a location update.
32) The location update is sent to the base-station controller.
33) The base station controller transmits the request to the MSC/VLR.
34) If the telephone is in the area of a different MSC to which it was prior to being disconnected from the network, the location update request is sent to the HLR. If the terminal is in the area of the same MSC/VLR, the request is not sent to the HLR, but instead the MSC/VLR handles the processing.
35) The HLR sends a Location Update acknowledgement (provided stage 34 is effected).
36) The MSC/VLR notifies the application of the location update that has been made and the application initiates the desired function. In this case, positioning is initiated, if it has been decided that the terminal is within the observation area.
37) The MSC/VLR acknowledges the location update to the BSS.
38) & 39) The BSS acknowledges the location update to the terminal through the base station.

It is of course possible to use some other method, in order to achieve a corresponding functionality.

The term positioning or tracking of a terminal refers to the positioning system defining the position of the terminal sufficiently often for the positioning system to always possess at least approximate information as to where the terminal is located at any time. For this purpose the system can be programmed to position the terminal, for example, at specific even intervals, for example, every 10 minutes. In practice, it is worth increasing the efficiency of the system, so that positioning takes place at more frequent intervals, if the terminal is moving rapidly and at less frequent intervals, if the terminal is stationary or moving slowly. The positioning method used can also be selected according to the state of movement of the terminal.

When reference is made above to the termination of positioning or tracking, this refers to the termination of the continuous positioning or tracking of the relevant terminal, for the relevant service. It is possible that, even though the tracking of the terminal is terminated, for example, for a road-toll application, the terminal must continue to be tracked for some other application. Thus, when referring to the termination or initiation of positioning or tracking, the termination or initiation should be understood to be in relation to the relevant terminal and the relevant service, and that it does not necessarily refer to the initiation of the positioning or tracking of a terminal in an absolute sense. Further, it should be noted that, instead of totally terminating tracking, it is possible to terminate intensive tracking and change to tracking that is considerably less precise in its accuracy. The initiation and termination of tracking can then be interpreted in such a way that, on the basis of a single message received from the terminal, one type of tracking is terminated and another type of tracking is initiated.

As a concrete example, it is possible to consider the surveillance of persons, in such a way that an observation area is defined for the person, within which their position is determined at 10-minute intervals, but outside of the observation area their position is determined once a day. With the aid of such an embodiment, it would be possible to track the movements of the person continuously, without placing an unnecessary load on the system's resources. Despite this, it is possible to provide close surveillance of the person in the critical area. It is possible to proceed correspondingly in relation to tracking goods.

In the examples described above, the observation area or areas form a small part of the service area of the mobile network. In some embodiments it is, however, possible to operate the other way round, so that the observation area is considerably larger than the rest of the service area. Then too, detection devices are arranged in a transition zone between the observation area and the rest of the service area, for detecting a terminal, but with the difference to the examples shown in the figures that the observation area is, as it were, located around the rest of the service area. Such an embodiment could be useful, for example, when keeping trusted convicts under surveillance. It would then be possible to define an area or areas for the convict, in which continuous surveillance would not be required. Such areas could be, for example, a work area, a residence area, and/or a prison area. When leaving the defined area, i.e. when moving into the observation area, the prisoner would have to travel through the transition zone and active surveillance would be initiated.

In an application like that described above, positioning resources would be saved through the fact that the target terminal is located for most of the time in defined small areas. This example is a good illustration of the fact that the importance of dividing the service area of the mobile network between an observation area or areas and the rest of the service area does not lie purely in the geographical extent of the areas, but that in planning it is worth taking into account the distribution of the time spent by the target terminals in the various areas. Savings in resources arise, if at least some of the terminals connected to the service are located for a significant part of the time outside of the observation area. In practical planning this is worth taking into account, but the area division basis is, however, always the need for positioning and tracking relating to the relevant tracking service.

The invention is not intended to be restricted to only the examples given above, but instead the protection of the patent should be examined within the full scope of the accompanying Claims.

## Claims

1. A method for a tracking service having a control application (1G), in which tracking service the location of a terminal having a control unit is tracked in a mobile network, which has a service area, the method comprising:
- defming at least one observation area (1D), which is smaller than the service area of the mobile network, within the service area,
- defming at least one transition zone between the observation area and the rest of the service area,
- transmitting (1, 8) an area notification message in each transition zone and receiving (2, 9) the area notification message in the terminal,
- commanding, with the aid of the control unit of the terminal, the terminal to create a message in response to the received area notification message and to send (3, 4, 10, 11) the message to the control application (1G) of the tracking service,
- receiving the sent message in the control application of the tracking service, making, on the basis of the message, an interpretation (5, 12) in the control application (1G) of the tracking service, that the terminal is in the transition zone,
- in response to the interpretation that the terminal is in the transition zone, initiating (6) or terminating (13) the tracking (7) of the terminal for the said tracking service,
- wherein the tracking is carried out mainly in the observation area, and outside the observation area, the terminal is not tracked, or the tracking is carried out less thoroughly,
**characterized by**
- performing the method in a system that includes a mobile telephone network, a Cell Broadcast Center, a short-message centre (1B), and a positioning system (1C) communicating with the mobile network,
- using a GSM or UMTS terminal as the terminal,
- using a Cell Broadcast message sent by the control application (1G) as the area notification message, and
- controlling the terminal by means of a SIM Toolkit application to create the message in response to the received area notification message and to send (3, 4, 10, 11) the message to the control application (1G).

2. A method according to Claim 1, **characterized in that** several transition zones are defined between the observation area and the rest of the service area, in such a way that the transition zones cover the expected routes of the movement of the terminals between the observation area and the rest of the service area of the mobile network.

3. A method according to Claim 1, **characterized in that**
- in response to the reception of the message, a check is made in the control application of the tracking service, as to whether the terminal has been defined as being in the observation area,
- if the terminal has been defined as being in the observation area, the terminal is interpreted to be leaving the observation area, and
- if the terminal device is not defined as being in the observation area, the terminal is interpreted to be entering the observation area.

4. A method according to Claim 3, **characterized in that**
- tracking is terminated, if the terminal is interpreted to be leaving the observation area, and
- tracking is initiated, if the terminal is interpreted to be entering the observation area.

5. A method according to Claim 3, **characterized in that**
- if the terminal is interpreted to be leaving the observation zone, tracking of the terminal using a first tracking method is terminated and a message is sent to a second tracking method to initiate tracking using a second tracking method, and
- if the terminal is interpreted to be entering the observation zone, tracking of the terminal using the first tracking method is initiated and a message is sent to the second tracking method to terminate tracking using the second tracking method.

6. A method according to any of Claims 1 - 5, **characterized in that** the connection of the terminal to the mobile network is detected in the observation zone and is response to the detection tracking of the terminal is initiated.

7. A system for tracking a mobile station in a mobile network, **characterized in that** system is configured to perform a method according to any one of claims 1 to 6.

## Patentansprüche

1. Verfahren für einen Ortungsdienst mit einer Steueranwendung (1G), wobei in dem Ortungsdienst der Standort eines Endgeräts mit einer Steuereinheit in einem Mobilfunknetz geortet wird, das einen Versorgungsbereich aufweist, wobei das Verfahren Folgendes umfasst:
- Definieren mindestens eines Beobachtungsbereichs (1D), der kleiner als der Versorgungsbereich des Mobilfunknetzes ist, innerhalb des Versorgungsbereichs,
- Definieren mindestens einer Übergangszone zwischen dem Beobachtungsbereich und dem Rest des Versorgungsbereichs,
- Senden (1, 8) einer Bereichsmitteilungsnachricht in jeder Übergangszone und Empfangen (2, 9) der Bereichsmitteilungsnachricht in dem Endgerät,
- Anweisen des Endgeräts - mithilfe der Steuereinheit des Endgeräts -, eine Nachricht als Reaktion auf die empfangene Bereichsmitteilungsnachricht zu erzeugen und die Nachricht an die Steueranwendung (1G) des Ortungsdiensts zu senden (3, 4, 10, 11),
- Empfangen der gesendeten Nachricht in der Steueranwendung des Ortungsdiensts, wobei auf Basis der Nachricht eine Interpretation (5, 12) in der Steueranwendung (1G) des Ortungsdiensts angestellt wird, dass das Endgerät sich in der Übergangszone befindet,
- als Reaktion auf die Interpretation, dass das Endgerät sich in der Übergangszone befindet, Starten (6) oder Beenden (13) des Ortens (7) des Endgeräts für den Ortungsdienst,
- wobei das Orten vorwiegend in dem Beobachtungsbereich vorgenommen wird und außerhalb des Beobachtungsbereichs das Endgerät nicht geortet wird oder das Orten weniger gründlich vorgenommen wird,
**gekennzeichnet durch**
- Durchführen des Verfahrens in einem System, das ein Mobiltelefonnetz, ein Cell Broadcast Center, eine Kurznachrichtenzentrale (1B) und ein Positionsbestimmungssystem (1C) aufweist, die mit dem Mobilfunknetz kommunizieren,
- Verwenden eines GSM- oder UMTS-Endgeräts als das Endgerät,
- Verwenden einer Cell-Broadcast-Nachricht, die von der Steueranwendung (1G) gesendet wird, als die Bereichsmitteilungsnachricht und
- Steuern des Endgeräts mittels einer SIM-Toolkit-Anwendung dahingehend, die Nachricht als Reaktion auf die empfangene Bereichsmitteilungsnachricht zu erzeugen und die Nachricht an die Steueranwendung (1G) zu senden (3, 4, 10, 11).

2. Verfahren nach Anspruch 1, **dadurch gekennzeichnet, dass** mehrere Übergangszonen zwischen dem Beobachtungsbereich und dem Rest des Versorgungsbereichs derart definiert werden, dass die Übergangszonen die erwarteten Routen der Bewegung der Endgeräte zwischen dem Beobachtungsbereich und dem Rest des Versorgungsbereichs des Mobilfunknetzes abdecken.

3. Verfahren nach Anspruch 1, **dadurch gekennzeichnet, dass**
- als Reaktion auf den Empfang der Nachricht eine Prüfung in der Steueranwendung des Ortungsdiensts vorgenommen wird, ob das Endgerät als sich in dem Beobachtungsbereich befindend definiert wurde,
- wenn das Endgerät als sich in dem Beobachtungsbereich befindend definiert wurde, das Endgerät als den Beobachtungsbereich verlassend interpretiert wird, und
- wenn das Endgerät nicht als sich in dem Beobachtungsbereich befindend definiert wurde, das Endgerät als in den Beobachtungsbereich eintretend interpretiert wird.

4. Verfahren nach Anspruch 3, **dadurch gekennzeichnet, dass**
- das Orten beendet wird, wenn das Endgerät als den Beobachtungsbereich verlassend interpretiert wird,
und
- das Orten gestartet wird, wenn das Endgerät als in den Beobachtungsbereich eintretend interpretiert wird.

5. Verfahren nach Anspruch 3, **dadurch gekennzeichnet, dass**
- wenn das Endgerät als den Beobachtungsbereich verlassend interpretiert wird, das Orten des Endgeräts unter Anwendung eines ersten Ortungsverfahrens beendet wird und eine Nachricht an ein zweites Ortungsverfahren gesendet wird, um das Orten unter Anwendung eines zweiten Ortungsverfahrens zu starten, und
- wenn das Endgerät als in den Beobachtungsbereich eintretend interpretiert wird, das Orten des Endgeräts unter Anwendung eines ersten Ortungsverfahrens gestartet wird und eine Nachricht an das zweite Ortungsverfahren gesendet wird, um das Orten unter Anwendung des zweiten Ortungsverfahrens zu beenden.

6. Verfahren nach einem der Ansprüche 1-5, **dadurch gekennzeichnet, dass** die Verbindung des Endgeräts mit dem Mobilfunknetz in der Beobachtungszone erfasst wird und als Reaktion auf die Erfassung das Orten des Endgeräts gestartet wird.

7. System zum Orten einer Mobilstation in einem Mobilfunknetz, **dadurch gekennzeichnet, dass** das System dazu konfiguriert ist, ein Verfahren nach einem der Ansprüche 1 bis 6 durchzuführen.

## Revendications

1. Procédé pour un service de suivi ayant une application de commande (1G), dans lequel service de suivi, la position d'un terminal ayant une unité de commande est suivie dans un réseau mobile qui a une aire de service, le procédé comprenant :
- la définition d'au moins une aire d'observation (1D), qui est plus petite que l'aire de service du réseau mobile, dans l'aire de service,
- la définition d'au moins une zone de transition entre l'aire d'observation et le reste de l'aire de service,
- l'émission (1, 8) d'un message de notification d'aire dans chaque zone de transition et réception (2, 9) du message de notification d'aire dans le terminal,
- la commande, à l'aide de l'unité de commande du terminal, du terminal pour créer un message en réponse au message de notification d'aire reçu et pour envoyer (3, 4, 10, 11) le message à l'application de commande (1G) du service de suivi,
- la réception du message envoyé dans l'application de commande du service de suivi, la réalisation, sur la base du message, d'une interprétation (5, 12) dans l'application de commande (1G) du service de suivi, selon laquelle le terminal est dans la zone de transition,
- en réponse à l'interprétation selon laquelle le terminal est dans la zone de transition, le déclenchement (6) ou l'interruption (13) du suivi (7) du terminal pour ledit service de suivi,
- dans lequel le suivi est exécuté principalement à l'intérieur de l'aire d'observation, et à l'extérieur de l'aire d'observation, le terminal n'est pas suivi, ou le suivi est exécuté moins intensément,
**caractérisé par**
- l'exécution du procédé dans un système qui comporte un réseau de téléphonie mobile, un centre de diffusion cellulaire, un centre de mini-messagerie (1B) et un système de positionnement (1C) communiquant avec le réseau mobile,
- l'utilisation d'un terminal GSM ou UMTS en tant que terminal,
- l'utilisation d'un message de diffusion cellulaire envoyé par l'application de commande (1G) en tant que message de notification d'aire, et
- la commande du terminal au moyen d'une application SIM Toolkit afin de créer le message en réponse au message de notification d'aire reçu et afin d'envoyer (3, 4, 10, 11) le message à l'application de commande (1G).

2. Procédé selon la revendication 1, **caractérisé en ce que** plusieurs zones de transition sont définies entre l'aire d'observation et le reste de l'aire de service d'une manière telle que la zone de transition couvre les itinéraires attendus de déplacement des terminaux entre l'aire d'observation et le reste de l'aire de service du réseau mobile.

3. Procédé selon la revendication 1, **caractérisé en ce que**
- en réponse à la réception du message, un contrôle est effectué dans l'application de commande du service de suivi pour définir si le terminal est dans l'aire d'observation,
- s'il a été défini que le terminal est dans l'aire d'observation, il est interprété que le terminal quitte l'aire d'observation, et
- s'il est défini que le dispositif terminal n'est pas l'aire d'observation, il est interprété que le terminal entre dans l'aire d'observation.

4. Procédé selon la revendication 3, **caractérisé en ce que**
- le suivi est interrompu s'il est interprété que le terminal quitte l'aire d'observation, et
- le suivi est déclenché s'il est interprété que le terminal entre dans l'aire d'observation.

5. Procédé selon la revendication 3, **caractérisé en ce que**
- s'il est interprété que le terminal quitte l'aire d'observation, le suivi du terminal à l'aide d'un premier procédé de suivi est interrompu et un message est envoyé à un second procédé de suivi afin de déclencher un second procédé de suivi, et
- s'il est interprété que le terminal entre dans l'aire d'observation, le suivi du terminal à l'aide du premier procédé de suivi est déclenché et un message est envoyé au second procédé de suivi pour interrompre le suivi à l'aide du second procédé de suivi.

6. Procédé selon l'une quelconque des revendications 1 à 5, **caractérisé en ce que** la connexion du terminal au réseau mobile est détectée dans l'aire d'observation et, en réponse à la détection, le suivi du terminal est déclenché.

7. Système de suivi d'une station mobile dans un réseau mobile, **caractérisé en ce que** le système est configuré pour exécuter le procédé selon l'une quelconque des revendications 1 à 6.
